# EUROPEAN PATENT SPECIFICATION

(11) **EP 0 944 301 B1**
(45) Date of publication and mention of the grant of the patent: **11.06.2003**
(21) Application number: 98931147.7
(22) Date of filing: 01.07.1998
(51) Int. Cl.: A01J 7/02, A01J 7/04, A01J 5/017

(54) **AN IMPLEMENT FOR AUTOMATICALLY MILKING ANIMALS**
VORRICHTUNG ZUM AUTOMATISCHEN MELKEN VON TIEREN
DISPOSITIF POUR TRAITE AUTOMATIQUE D'ANIMAUX

(30) Priority: 04.07.1997 NL 1006473
(43) Date of publication of application: 29.09.1999
(73) Proprietor: MAASLAND N.V., 3155 PD Maasland (NL)
(72) Inventor: VAN DEN BERG, Karel, NL-2971 BR Bleskensgraaf (NL)
(74) Representative: Corten, Maurice Jean F.M.
(86) International application number: PCT/NL98/00376
(87) International publication number: WO 99/001024

(56) References cited:
- EP-A- 0 603 150
- EP-A- 0 679 331
- EP-A- 0 761 091
- WO-A-96/16536

## Description

The invention relates to an implement for automatically milking animals, such as cows, according the preamble of claim 1.

Such an implement is known from the European patent application EP-A-0761091.

The invention aims at providing a simple and cheap manner a means for cleaning the cleaning member without impeding the further cleaning circuit.

This is done by an implement for automatically milking animals as defined above comprising the features of the characterizing part of claim 1.

In accordance with a further inventive feature, in the cleaning fluid supply line between the buffer vessel and the cleaning device there is included a shut-off valve so that cleaning fluid can be supplied in a dosed manner to the cleaning members. For automation purposes the shut-off valve is designed as a computer-controlled two-way valve. According to the invention, the cleaning fluid supply line between the rinsing fluid tank and the buffer vessel can also be shut-off by means of such a valve. In order to prevent the rinsing fluid tank and/or the buffer vessel from forming a vacuum during flowing out of rinsing fluid, these containers comprise a bleed line in which a shut-off valve is included. In accordance with the invention, for the purpose of accelerating the flowing out of the fluid present in the rinsing fluid tank and/or the buffer vessel, it is also possible to connect thereto a compressed air line which is also provided with a shut-off valve. The aforementioned shut-off valves may be designed as computer-controlled valves. In accordance with a further inventive feature, for economizing cleaning fluid there is included at least one measuring vessel in the cleaning fluid supply line between the buffer vessel and the shut-off valve for the cleaning device. According to the invention, the content of the measuring vessel can be chosen such that the quantity of cleaning fluid the measuring vessel can contain is just enough for a proper cleaning of the cleaning members after a cleaning. In a preferred embodiment of the invention, the content of the buffer vessel amounts to approximately 3 l, whereas the content of the measuring vessel amounts to approximately 0.3 l. The quantity of 0.3 l of cleaning/disinfecting fluid is just enough for cleaning c.q. disinfecting the cleaning members after one cleaning of the teats of the udder of the animal to be milked. It will be obvious that the content of the buffer vessel and/or the measuring vessel depends on the dimension and/or the degree of contamination of the cleaning members. In order to prevent that the quantity of rinsing fluid supplied to the cleaning device exceeds the content of the measuring vessel, according to the invention a nonreturn valve or a shut-off valve is provided between the buffer vessel and the measuring vessel. Said nonreturn valve or shut-off valve may be included in the cleaning fluid supply line or may be disposed between the buffer vessel and the measuring vessel.

According to a further inventive feature, there is connected to the measuring vessel a bleed/compressed air line in which a shut-off valve is included which is preferably designed as a computer-controlled three-way valve. In a favourable embodiment of the invention, the compressed air line is capable of cooperating with the nonreturn valve between the buffer vessel and the measuring vessel, the arrangement being such that, when pressure is applied to the measuring vessel, the latter is shut-off from the buffer vessel and the content of the measuring vessel is supplied to the cleaning device.

According to again another aspect of the invention, the above described implement can be applied very well in combination with a milking robot for automatically connecting teat cups to the teats of an animal to be milked.

According to a further aspect of the invention, the cleaning members can be brought to under the udder of an animal to be cleaned with the aid of the milking robot or a separate robot.

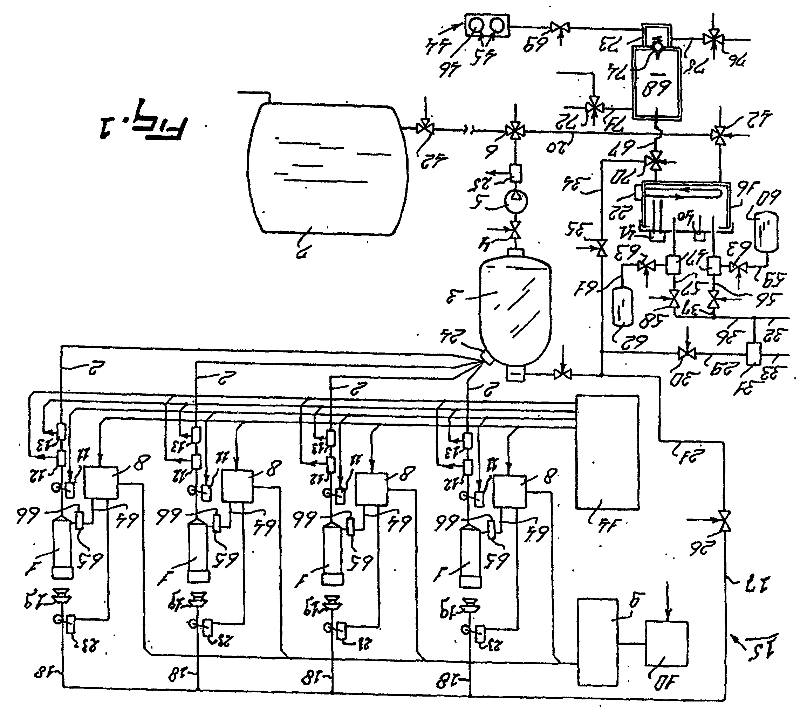

The invention will now be explained in further detail with reference to an embodiment, as represented in the accompanying drawing 1 showing a schematic arrangement of an implement for automatically milking animals, in which are indicated only those parts of the implements which are relevant for the explanation of the present invention. It will be obvious that the invention is by no means limited to these embodiments; the exemplary embodiments only serve to illustrate the invention.

When the teat cups have to be connected, in the milkglass 3 there is applied an underpressure by means of the vacuum balance tank 9 and consequently there is sucked in air by the teat space of the relevant teat cups and milk lines, of course as far as the latter have been released by the shut-off means 11. When the teat cups are connected simultaneously, the shut-off means 11 will release the relevant milk lines 2 simultaneously; however, when the teat cups are connected consecutively, the milk lines will also be released consecutively by the shut-off means 11. As soon as there is applied an underpressure in a milk line, as long as the relevant teat cup has not yet been connected to a teat, there is sucked in air by the teat cup, so that in the teat space the pressure still remains equal to that of the environment. When by means of the pulsator 8 there is also applied an environmental pressure in the pulsation space of this teat cup or a pressure being somewhat lower than the environmental pressure, the lining of this teat cup will be in a condition of rest or even be sucked to some extent against the wall of the teat cup. In this situation the teat cup can be disposed around the teat of an animal to be milked without the lining of this teat cup being affected thereby. As soon as the teat cup has entirely been disposed around the animal's teat, in the teat space there will be created an underpressure which is measured by the vacuum sensor 12 and which, when a predetermined value has been reached, supplies a signal indicating said value to the computer 14 which controls the pulsator 8 for applying a pulsating underpressure in the pulsation space of the teat cup 1. In order to stimulate the milk yield, the pulsation frequency may be higher in a first stage than in a further stage of milking. When, after a time, the milk flow decreases and has come below a predetermined threshold value, the flow sensor 13 supplies a signal to the computer 14 which ensures that the pulsator 8 replaces the pulsating underpressure in the pulsation space of the teat cup 1 by a fixed underpressure, so that the lining of the teat cup 1 is sucked against the wall of the teat cup. This fixed underpressure will be equal to or somewhat lower than the underpressure in the milk line 2. When the lining has been sucked to the wall of the teat cup 1, the underpressure in the teat space can subsequently be removed and the teat cup can be disconnected. Due to the pressure applied in the pulsation space by means of the computer relative to the pressure in the teat space, so in particular during connection and disconnection of the teat cups, there is created such a difference in pressure over the lining of the teat cups that wear of this lining is limited to a considerable extent.

When undesired fluctuations occur in the underpressure in the teat space and the milk lines, which fluctuations can be established by continuously measuring the underpressure by means of the vacuum sensors 12, with the aid of the computer 14 control signals can be derived, which, supplied to the relevant shut-off means, ensure that this underpressure is maintained constant. A vacuum sensor 12, the computer 14 and a shut-off means 11 form together a control chain for maintaining the pressure in a relevant milk line 2 at a constant value recorded in the computer 14.

Besides for applying the correct pressure in the pulsation space, the pulsators 8 may also play a role during rinsing of the teat cups 1. For the purpose of rinsing, the implement comprises a rinsing circuit 15 which is constituted by a rinsing fluid tank 16, a common rinsing fluid supply line 17, separate rinsing fluid supply lines 18 which are all connected to the common rinsing fluid supply line 17, and rinsing jetters 19 connected to the separate rinsing fluid supply lines 18, to which rinsing jetters 19 the teat cups 1 can be connected. For the purpose of obtaining a closed rinsing circuit, the milkglass 3 can be connected to the rinsing fluid tank 16 via the valve 6 and a return line 20. By means of the rinsing fluid line 21 there can further be obtained directly a shortened rinsing circuit through the milk glass 3. With the aid of a heating element 22 in the rinsing fluid tank 16, water of preferably 40 to 50°C containing a detergent can be sucked in due to the underpressure in the milkglass 3 via the common rinsing fluid supply line 17, the separate rinsing fluid supply lines 18, the rinsing jetters 19, the teat cups 1 and the milk lines 2. This rinsing fluid is then pumped back via the valve 4 by means of the pump 5 and via the valve 6 to the rinsing fluid tank 16. When the rinsing fluid is passed through the separate rinsing fluid supply lines 18, it may occur that the quantities of rinsing fluid passing through the various teat cups differ from each other to a considerable extent. Therefore, a shut-off means 23 is included in each of the rinsing fluid supply lines 18. Each shut-off means 23 is under the control of a pulsator 8. The pulsators 8 can be controlled by the computer 14 in such a manner that the shut-off means 23 connected to the relevant pulsators consecutively release and shut-off the rinsing fluid supply lines 18, so that the rinsing fluid is passed consecutively through the respective teat cups 1. Apart from a closed rinsing circuit, there may also be used an open rinsing circuit. In that case water warmer than approximately 75°C or possibly steam is sucked in from the rinsing fluid tank 16 and passed via the common rinsing fluid supply line 17, the separate rinsing fluid supply lines 18 and the rinsing jetters 19 through the teat cups and is discharged from there, with the aid of the pump 5, through the milk lines 2, via the milkglass 3, to e.g. a sewer. Although water is wasted thereby, just due to the fact that the temperature of the rinsing water is very high or even steam is applied, the flowing time of the rinsing water through the teat cups and the milk lines can be very short, e.g. two to five minutes. Furthermore, in that situation no chemical detergents need to be added to the water. Particularly in the case that also the milk tank 7 has to be cleaned, rinsing water may be passed from the milkglass 3 by means of the pump 5 and via the valve 6 to the milk tank 7. In order to ensure an optimal rinsing of the teat cups, the temperature of the rinsing fluid during rinsing is maintained as constant as possible. To this end a temperature sensor 25 is included in the rinsing circuit 15. This temperature sensor is in connection with the computer 14 which controls the heating element 22 in the rinsing fluid tank.

To the rinsing fluid supply line 17 a first supply line 29 for rinsing fluid, such as water, is connected. In the first supply line 29 there is included a computer-controlled valve 30. For the purpose of controlling the temperature of the rinsing fluid, the first supply line 29 comprises a thermostatically controlled valve 31 to which a hot-water line 32 and a cold-water line 33 are connected. For the purpose of pre-rinsing the milk lines, the teat cups and the milkglass, by means of the computer 14 the thermostatically controlled valve 31 is set at a rinsing fluid temperature of between 32°C and 42°C, preferably approximately 37°C, and the computer-controlled valve 30 is opened for approximately 5 to 7 minutes.

To the rinsing fluid supply line 17 a second supply line 34 for a further rinsing fluid is additionally connected, said second supply line 34 extending via the rinsing fluid tank 16. The second supply line 34 also comprises a valve 35 controlled by the computer 14. In the present embodiment the further rinsing fluid is hot water which, via a line 36 branched off from the hot-water line 32, can flow into the rinsing fluid tank 16 when the computer-controlled valve 37 included in the line 36 is opened by means of a signal of the computer 14.

The rinsing fluid tank 16 comprises a heating element 22 controlled by a thermostat 40, by means of which heating element 22 the water can be heated up to a temperature of approximately 78°C, which temperature is very suitable for heat-cleaning. In order to prevent the rinsing fluid tank 16 from boiling dry, the latter comprises liquid level pins 41 supplying a signal to the computer 14 if there is no water or not enough water present in the rinsing fluid tank 16. In the rinsing circuit, near the milkglass 3, there is furthermore included a temperature sensor 24 with the aid of which the temperature of the rinsing fluid can be measured, the result of this measurement being supplied to the computer 14. The temperature sensor 24 is preferably disposed at the end of the rinsing circuit, i.e. spaced apart from the first and second supply lines, so that at the end of the rinsing circuit there can be checked whether the desired and/or minimum temperature of the (pre-)rinsing fluid has also been reached there. If the minimum temperature is not reached, the computer 14, in the pre-rinsing cycle, supplies a signal to the thermostatically controlled valve 31 or, in the main rinsing cycle, supplies a signal to the thermostat 40, until the desired minimum temperature of the (pre-)rinsing fluid has been reached.

For discharging the rinsing fluid into e.g. the sewer, the rinsing circuit comprises another two computer-controlled valves 42. Infected milk, if any, or foremilk can be discharged to the sewer after opening the computer-controlled valve 6. The computer-controlled valve 6 is preferably arranged close to the milk collecting element 3.

Via the first supply line 29 rinsing fluid supplied can be conveyed to a cleaning device 44 for cleaning of the cleaning members 45 with the aid of which the udder and/or the teats of an animal are cleaned. In the present embodiment, the cleaning members 45 are designed as two spaced apart cleaning rollers 46 which can be brought to under the animals udder by means of a (non-shown) robot. During cleaning the teats are cleaned by being rubbed between the cleaning rollers 46 which are driven in opposite directions.

For the purpose of adding of acid or lye to the rinsing fluid tank 16, the line 36 is split up into a first line 56 and a second line 57 both debouching into the rinsing fluid tank 16. In the first line 56 and the second line 57 there is included a venturi device 47, while in both lines 56 and 57 there are included computer-controlled valves 58. To the venturi device 47 included in the first line 56 there is connected, via a line 59, a tank 60 containing an alkaline liquid, while to the venturi device 47 included in the second line 57 there is connected, via a line 61, a tank 62 containing an acid. In the lines 59 and 61 there are further included computer-controlled valves 63.

The venturi device 47 comprises a cylindrical housing with a supply nipple and a discharge nipple. The supply nipple extends in the cylindrical housing until the discharge nipple and has a tapering end portion. By means of a further nipple and a further line, a tank containing disinfecting fluid, is connected to the cylindrical housing. In the further line there is included a computer-controlled valve. The water flowing through the venturi device 47 ensures that there is created an underpressure in the cylindrical housing, so that the disinfecting fluid present in the tank is sucked into the cylindrical housing and mixed with the water.

Each of the teat cups 1 is further provided with a pulsation line 64 in which a dung separating device 65 is included. The dung separating device 65 comprises a vessel 66 to which, near its upper side, interrupted by the vessel 66, the pulsation line 64 is connected. The dung separating device 65 is included in the pulsation line 64 between the teat cup 1 and the pulsator 8.

Via a cleaning fluid supply line 67 the cleaning device 44 is connected to the rinsing fluid tank 16. In the cleaning fluid supply line 67 there is included a buffer vessel 68 for rinsing fluid of the cleaning device 44. In the cleaning fluid supply line 67 between the buffer vessel 68 and the cleaning device 44 there is included a computer-controlled two-way valve 69. There is also included a computer-controlled two-way valve 70 in the cleaning fluid supply line 67 between the rinsing fluid tank 16 and the buffer vessel 68, so that, when the buffer vessel 68 is filled, by shutting-off the cleaning fluid supply line 67, the buffer vessel 68 can be shut-off from the cleaning circuit in which the rinsing fluid tank 16 is included. To the buffer vessel 68 there is further connected a bleed/compressed air line 71 comprising a computer-controlled three-way valve 72 by means of which it is possible to bleed the buffer vessel 68 on the one hand and to apply an overpressure therein on the other hand. Near the lower side of the buffer vessel 68 there is further disposed a measuring vessel 73 which is in connection with the buffer vessel 68 via a nonreturn valve 74. From the buffer vessel 68, via the nonreturn valve 74, a dosed quantity of cleaning fluid and/or disinfecting fluid can flow into the measuring vessel 73. In opposite direction this is not possible. In a preferred embodiment of the invention, the content of the buffer vessel 68 amounts to approximately 3 l, while the content of the measuring vessel amounts to approximately 0.3 l. To the measuring vessel 73 there is also connected a bleed/compressed air line 75 also comprising a computer-controlled three-way valve 76 enabling to bleed the measuring vessel 73 on the one hand, and consequently to bring the pressure therein to the same level as that in the buffer vessel 68, and on the other hand to apply an overpressure therein by means of the compressed air. When there is applied an overpressure in the measuring vessel 73, the latter is shut-off automatically from the buffer vessel 68 by means of the nonreturn valve 74 and rinsing fluid can be supplied to the cleaning device when the computer-controlled two-way valve 69 is opened, whereafter the cleaning members 45 are cleaned and/or disinfected.

According to the invention it is possible to dispose, besides the measuring vessel 73; one or more additional measuring vessels near the lower side of the buffer tank, for the purpose of cleaning therewith in a similar manner other parts of the milking implement, such as e.g. the teat cups.

## Claims

1. An implement for automatically milking animals, such as cows, which implement comprises a rinsing circuit for at least cleaning teat cups (1), wash lines and milk lines, in which rinsing circuit there is included a rinsing fluid tank (16), and which implement is further provided with at least one cleaning member (45) with the aid of which the teats and/or the udder of the animal are cleaned, as well as a cleaning device (44) for cleaning the cleaning member (45), which cleaning device (44) is connected to the rinsing fluid tank (16) via a cleaning fluid supply line (67) **characterized in that** in the cleaning fluid supply line (67) there is included a buffer vessel (68) for storage of cleaning fluid.

2. An implement as claimed in claim 1, **characterized in that** in the cleaning fluid supply line (67) between the buffer vessel (68) and the cleaning device (44) there is included a shut-off valve (69).

3. An implement as claimed in claim 2, **characterized in that** the shut-off valve (69) is designed as a computer-controlled two-way valve.

4. An implement as claimed in claim 1, 2 or 3, **characterized in that** in the cleaning fluid supply line (67), between the rinsing fluid tank (16) and the buffer vessel (68) there is included a shut-off valve (70).

5. An implement as claimed in claim 4, **characterized in that** the shut-off valve (70) between the rinsing fluid tank (16) at the buffer vessel (68) is designed as a computer-controlled three-way valve.

6. An implement as claimed in any one of the preceding claims, **characterized in that** to the rinsing fluid tank (16) and/or the buffer vessel (68) there is connected a bleed/compressed air line (71) in which a shut-off valve (72) is included.

7. An implement as claimed in claim 6, **characterized in that** the shut-off valve (72) in the bleed/compressed air line is designed as a computer-controlled three-way valve.

8. An implement as claimed in any one of claims 1 to 7, **characterized in that** in the cleaning fluid supply line (67) between the buffer vessel (68) and the shut-off valve (69) for the cleaning device (44) there is included at least one measuring vessel (73).

9. An implement as claimed in claim 8, **characterized in that** between the buffer vessel (68) and the measuring vessel (73) there is included a non-return valve (74) or a shut-off valve.

10. An implement as claimed in claim 8 or 9, **characterized in that** there is connected to the measuring vessel (73) a bleed/compressed air line (75) in which there is included a shut-off valve (76) which is preferably designed as a computer-controlled three-way valve.

11. An implement as claimed in any one of claims 1 to 10, **characterized in that** the content of the buffer vessel (68) amounts to approximately 3 l and that of the measuring vessel to approximately 0.3 l.

12. An implement as claimed in any one of the preceding claims, **characterized in that** the implement is provided with a milking robot for automatically connecting the teat cups to the teats of an animal to be milked.

13. An implement as claimed in any one of the preceding claims, **characterized in that** the cleaning members can be brought to under the udder of the animal to be cleaned with the aid of the milking robot or a separate robot.

## Patentansprüche

1. Vorrichtung zum automatischen Melken von Tieren, wie z. B. Kühen, wobei die Vorrichtung einen Spülkreislauf zumindest zum Keinigen von Zitzenbechern (1), Waschleitungen und Milchleitungen umfaßt, wobei in dem Spülkreislauf ein Spülflüssigkeitsbehälter (16) enthalten ist, und wobei die Vorrichtung ferner mit mindestens einem Reinigungsglied (45) versehen ist, mit dessen Hilfe die Zitzen und/oder das Euter des Tieres gereinigt werden, sowie mit einer Reinigungsvorrichtung (44) zum Reinigen des Reinigungsgliedes (45), wobei die Reinigungsvorrichtung (44) über eine Reinigungsflüssigkeits-Zuführleitung (67) mit dem Spülflüssigkeitsbehälter (16) verbunden ist,
**dadurch gekennzeichnet, daß** in der Reinigungsflüssigkeits-Zuführleitung (67) ein Pufrerbehälter (68) zur Aufnahme von Reinigungsflüssigkeit angeordnet ist.

2. Vorrichtung nach Anspruch 1,
**dadurch gekennzeichnet, daß** in der Reinigungsflüssigkeits-Zuführleitung (67) zwischen dem Pufferbehälter (68) und der Reinigungsvorrichtung (44) ein Absperrventil (69) angeordnet ist.

3. Vorrichtung nach Anspruch 2,
**dadurch gekennzeichnet, daß** das Absperrventil (69) als rechnergesteuertes Zweiwegeventil ausgeführt ist.

4. Vorrichtung nach Anspruch 1, 2 oder 3,
**dadurch gekennzeichnet, daß** in der Reinigungsflüssigkeits-Zuführleitung (67) zwischen dem Spülflüssigkeitsbehälter (16) und dem Pufferbehälter (68) ein Absperrventil (70) angeordnet ist.

5. Vorrichtung nach Anspruch 4,
**dadurch gekennzeichnet, daß** das Absperrventil (70) zwischen dem Spülflüssigkeitsbehälter (16) und dem Pufferbehälter (68) als rechnergesteuertes Dreiwegeventil ausgeführt ist.

6. Vorrichtung nach einem der vorhergehenden Ansprüche,
**dadurch gekennzeichnet, daß** an den Spülflüssigkeitsbehälter (16) und/oder den Pufferbehälter (68) eine Entlüftungs-/Druckluftleitung (71) angeschlossen ist, in der ein Absperrventil (72) angeordnet ist.

7. Vorrichtung nach Anspruch 6,
**dadurch gekennzeichnet, daß** das Absperrventil (72) in der Entlüftungs-/Druckluftleitung als rechnergesteuertes Dreiwegeventil ausgeführt ist.

8. Vorrichtung nach einem der Ansprüche 1 bis 7,
**dadurch gekennzeichnet, daß** in der Reinigungsflüssigkeits-Zuführleituna (67) zwischen dem Pufferbshälter (68) und dem Absperrventil (69) für die Reinigungsvorrichtung (44) mindestens ein Meßbehälter (73) angeordnet ist.

9. Vorrichtung nach Anspruch 8,
**dadurch gekennzeichnet, daß** zwischen dem Pufferbehälter (68) und dem Meßbehälter (73) ein Rückschlagventil (74) oder ein Absperrventil angeordnet ist.

10. Vorrichtung nach Anspruch 8 oder 9,
**dadurch gekennzeichnet, daß** an den Meßbehälter (73) eine Entlüftungs-/Druckluftleitung (75) angeschlossen ist, in der ein Absperrventil (76) angeordnet ist, das vorzugsweise als rechnergesteuertes Dreiwegeventil ausgeführt ist.

11. Vorrichtung nach einem der Ansprüche 1 bis 10,
**dadurch gekennzeichnet, daß** der Inhalt des Pufferbehälters (68) etwa 3 1 und der des Meßbehälters etwa 0,3 1 beträgt.

12. Vorrichtung nach einem der vorhergehenden Ansprüche,
**dadurch gekennzeichnet, daß** die Vorrichtung mit einem Melkroboter zum automatischen Anschließen der Zitzenbecher an die Zitzen eines zu melkenden Tieres versehen ist.

13. Vorrichtung nach einem der vorhergehenden Ansprüche,
**dadurch gekennzeichnet, daß** die Reinigungsglieder mit Hilfe des Melkroboters oder eines separaten Roboters unter das Euter des zu reinigenden Tieres befördert werden können.

## Revendications

1. Dispositif pour la traite automatique d'animaux, tels que des vaches, lequel dispositif comprend un circuit de rinçage pour au moins nettoyer des gobelets trayeurs (1), des lignes de nettoyage et des lignes de lait, circuit de rinçage, dans lequel un réservoir de fluide de rinçage (16) est inclus, et lequel dispositif est en outre pourvu d'au moins un élément de nettoyage (45) à l'aide duquel les trayons et/ou le pis de l'animal sont nettoyés, ainsi qu'un dispositif de nettoyage (44) pour nettoyer l'élément de nettoyage (45), lequel dispositif de nettoyage (44) est raccordé au réservoir de fluide de rinçage (16) via une ligne d'alimentation en fluide de rinçage (67), **caractérisé en ce qu'**une cuve tampon (68) pour le stockage de fluide de nettoyage est incluse dans la ligne d'alimentation en fluide de rinçage (67).

2. Dispositif selon la revendication 1, **caractérisé en ce qu'**une vanne d'arrêt (69) est incluse dans la ligne d'alimentation en fluide de nettoyage (67) entre la cuve tampon (68) et le dispositif de nettoyage (44).

3. Dispositif selon la revendication 2, **caractérisé en ce que** la vanne d'arrêt (69) est conçue comme une vanne à deux voies commandée par ordinateur.

4. Dispositif selon la revendication 1, 2 ou 3, **caractérisé en ce qu'**une vanne d'arrêt (70) est incluse dans la ligne d'alimentation en fluide de nettoyage (67) entre le réservoir de fluide de rinçage (16) et la cuve tampon (68).

5. Dispositif selon la revendication 4, **caractérisé en ce que** la vanne d'arrêt (70) entre le réservoir de fluide de rinçage (16) et la cuve tampon (68) est conçue comme une vanne à trois voies commandée par ordinateur.

6. Dispositif selon l'une quelconque des revendications précédentes, **caractérisé en ce qu'**une ligne de purge/d'air comprimé (71), dans laquelle une vanne d'arrêt (72) est incluse, est raccordée au réservoir de fluide de rinçage (16) et/ou à la cuve tampon (68).

7. Dispositif selon la revendication 6, **caractérisé en ce que** la vanne d'arrêt (72) dans la ligne de purge/d'air comprimé est conçue comme une vanne à trois voies commandée par ordinateur.

8. Dispositif selon l'une quelconque des revendications 1 à 7, **caractérisé en ce qu'**au moins une cuve de jaugeage (73) est incluse dans la ligne d'alimentation en fluide de nettoyage (67) entre la cuve tampon (68) et la vanne d'arrêt (69) pour le dispositif de nettoyage (44).

9. Dispositif selon la revendication 8, **caractérisé en ce qu'**une vanne de non-retour (74) ou une vanne d'arrêt est incluse entre la cuve tampon (68) et la cuve de jaugeage (73).

10. Dispositif selon la revendication 8 ou 9, **caractérisé en ce qu'**une ligne de purge/d'air comprimé, dans laquelle une vanne d'arrêt qui est de préférence conçue comme une vanne à trois voies commandée par ordinateur est incluse, est raccordée à la cuve de jaugeage (73).

11. Dispositif selon l'une quelconque des revendications 1 à 10, **caractérisé en ce que** le contenu de la cuve tampon (68) atteint à peu près 3 litres et celui de la cuve de jaugeage atteint à peu près 0,3 litre.

12. Dispositif selon l'une quelconque des revendications précédentes, **caractérisé en ce que** le dispositif est pourvu d'un robot de traite pour raccorder automatiquement les gobelets trayeurs aux trayons d'un animal à traire.

13. Dispositif selon l'une quelconque des revendications précédentes, **caractérisé en ce que** les éléments de nettoyage peuvent être amenés au-dessous du pis de l'animal afin d'être nettoyés à l'aide du robot de traite ou d'un robot distinct.
